# EUROPEAN PATENT SPECIFICATION

(11) **EP 3 727 846 B1**
(45) Date of publication and mention of the grant of the patent: **04.03.2026**
(21) Application number: 18815766.3
(22) Date of filing: 17.12.2018
(51) Int. Cl.: B32B 17/10

(54) **LAMINATED GLASS HAVING AN OBSCURATION AREA WITH EMBEDDED TRANSPARENT AREAS**
VERBUNDGLAS MIT EINEM VERDUNKELUNGSBEREICH MIT EINGEBETTETEN TRANSPARENTEN BEREICHEN
VERRE STRATIFIÉ PRÉSENTANT UNE ZONE D'OBSCURATION COMPORTANT DES ZONES TRANSPARENTES INCORPORÉES

(30) Priority: 22.12.2017 EP 17209906
(43) Date of publication of application: 28.10.2020
(73) Proprietor: Kuraray Europe GmbH, 65795 Hattersheim (DE)
(72) Inventor: KELLER, Uwe, 77210 Avon (FR)
(74) Representative: Janßen, Christian Oliver
(86) International application number: PCT/EP2018/085249
(87) International publication number: WO 2019/121535

(56) References cited:
- EP-A1- 3 074 221
- US-A1- 2015 217 547
- US-A1- 2016 243 796
- US-A1- 2016 339 676
- US-A1- 2017 232 713

## Description

### Technical Field

The present invention relates to laminated glass, especially windshields, which are provided with an obscuration area with embedded transparent areas for operating optical devices.

In most windshields for cars, the inner glass sheet is provided with a non-transparent, mostly black, frame to protect the sealing or the adhesive which mechanically connects the windshield with the chassis from UV radiation. Alternatively, a black obscuration band can be applied to the outer glass sheet in a windshield which can be preferred for higher end cars. A common technique is to silk screen print low melting black glass frit on the glass surface and then sinter this frit at temperatures over 600 °C.

Applying of so called "black frit" with a sintering process is an established technology, but it alters the heat absorption properties of the glass part at the position of the obscuration areas, what causes temperature gradients in the glass part over short distances and will thus give rise to strong local deviations from the intended geometry. Resulting bending flaws can worsen the visual appearance of the glazing part for driver and passengers looking through such a glazing part, or may even give rise to too strong local changes of optical refraction power (optical flaw) what leads to failures in the operation of optical sensors positioned behind the windshield. Such optical devices or sensors are usually mounted behind non-transparent obscuration areas to avoid stray light and to cover the devices form being seen form outside of the vehicle. Such obscuration areas for windscreens made form "black frit" provided with cameras as optical sensors are for example disclosed in US20160243796.

US2015217547A1 relates to a method for producing glass laminates from a layered structure containing a plasticiser-containing polyvinyl acetal film and a polyvinyl acetal film with a low plasticiser content by means of fixing the polyvinyl acetal film with a low plasticiser content on the plasticiser-containing polyvinyl acetal film.

Especially for autonomous driving or assisted driving, the demands to the quality of optical devices in cars will increase. In this respect, any optical flaw of the laminated glass will be undesired.

### Object of the invention

Accordingly, it was an object of the invention to provide windscreens with obscuration areas without producing optical flaws associated with the black frit sintering process.

From a different technical field, it is known to provide thin PVB-films having a low or no plasticizer content with coatings or electrically conductive structures, which can be combined with common plasticized PVB-films to produce functionalized laminated glazing (EP3074221A1).

It was found that thin PVB-films having a low or no plasticizer content can be coated or printed with pigments.

Object of the present invention was therefore a laminated glass comprising two sheets of glass, combined by an adhesive film comprising at least one film B containing a polyvinyl acetal PB and at least one plasticiser WB; and provided with an obscuration area (1) having at least one transparent area (2) embedded herein wherein the obscuration area is provided by a film A containing a polyvinyl acetal PA and optionally at least one plasticiser WA wherein film A is positioned in contact with film B and wherein prior to combining the two glass sheets, the amount of plasticiser WA in film A is less than 22 % by weight and the amount of plasticiser WB in film B is at least 22 % by weight and wherein the obscuration area having at least one transparent area is provided by a printed or coated layer on at least one surface of film A and wherein the transparent areas are not provided with a printed or coated layer and wherein film A does not have an opening.

Hereinafter, the term "prior to lamination" refers to the state of the films A and B prior to having any contact to each other.

For example, the term refers to the composition of each film separately formed and separately wound to individual rolls. The term "prior to lamination" refers to the state for the layers or films before combining them either in the lamination process of the laminated glass or prior to building a stack from the layers used for lamination.

The term "obscuration area" refers to any region of the laminate having a light transmission in the visible spectrum of less than 5%. In a variant, the obscuration area may fade out towards transparency. In such variants, at least a part of the obscuration area of the laminate has a light transmission in the visible spectrum of less than 5%.

The term "obscuration area having at least one transparent area" refers to one or more region of the laminate having a reduced light transmission as defined above, with transparent areas embedded therein. For example, Fig, 1 shows an obscuration area (1) and three transparent areas (2). The transparent areas have preferable a light transmission in the visible spectrum not less than the rest of the laminate which is not covered by an obscuration area.

In the laminated glass according to the invention, the transparent areas of the obscuration area may be provided with optical detection devices positioned at or on one surface of a glass sheet. Optical detection devices are digital cameras, range finders, haze meters, rain sensors, target detectors, scanning laser devices (LIDAR) or related devices using electromagnetic radiation from within the UV/VIS and NIR/IR range of the spectrum.

The present invention is also advantageous for laminates comprising thin glass sheets, since sintering enamels on thin glass is even more prone to produce off-spec bended sheets with optical flaws. In a preferred embodiment of the invention, at least one of the glass sheets has a thickness of less than 2.1 mm, such as 1.8 mm, less than 1.8 mm; less than 1.6 mm; less than 1.4 mm; less than 1.0 mm; or less than 0.9 mm.

### Film A

Laminates according to the invention may comprise one or more films A, but at least one thin film A is oriented adjacent to a glass surface of the laminated glass according to the invention. It is also possible to apply a film A to both glass surfaces, such that a laminated glass laminate with a layer sequence glass/film A/film B/film A/glass is provided.

The obscuration area having at least one transparent area is provided by a printed or coated layer on at least one surface of film A and wherein the transparent areas are not provided with a printed or coated layer.

The printed or coated layer contains an inorganic or organic pigment, which should not dissolve in the polymer matrix and thus resist migration from film A to B.

As pigments, preferable carbon black, iron oxides, polyaniline, perylenes or spinel pigments are used. The pigments may be dispersed in a carrier fluid like water, alcohol or mixtures of alcohol and water. Furthermore, binders like polyvinylalcohol, polyvinylbutyral, polyvinylpyrrolidone, polyacrylates, polyurethanes or poly styrene-acrylate may be present. Such printing compositions are referred to as "printing inks" or simple "inks" hereinafter.

Water-based printing inks are preferred over printing inks based on organic solvents since they do not swell or dissolve the film A and/or lead to film defects. Printing inks based on organic solvents can be used if the coating is thin and/or the drying step is fast such that the solvent does not migrate into the PVB film. It is beneficial to use a low molecular weight PVB as binder for the printing inks since it ensures good compatibility with the PVB containing films A and B.

The printing inks can be applied via techniques that are commonly known in the printing industry such as offset printing, rotogravure printing, flexography, and screen-printing, followed usually by a drying step.

In order to optimize ink-adhesion to the surface of a film A substrate, corona- or a related treatment can be used for activation of film A's surface prior every individual printing or coating step.

The obscuration area can be completely opaque and/or in part interrupted and/or have a transition area from a completely opaque edge into the non-printed transparent area. Interrupted printing may be achieved in form of dotted patterns. The pigmented band may continuously fade-in from transparent to opaque black or grey (without recurring to easily visible dots).

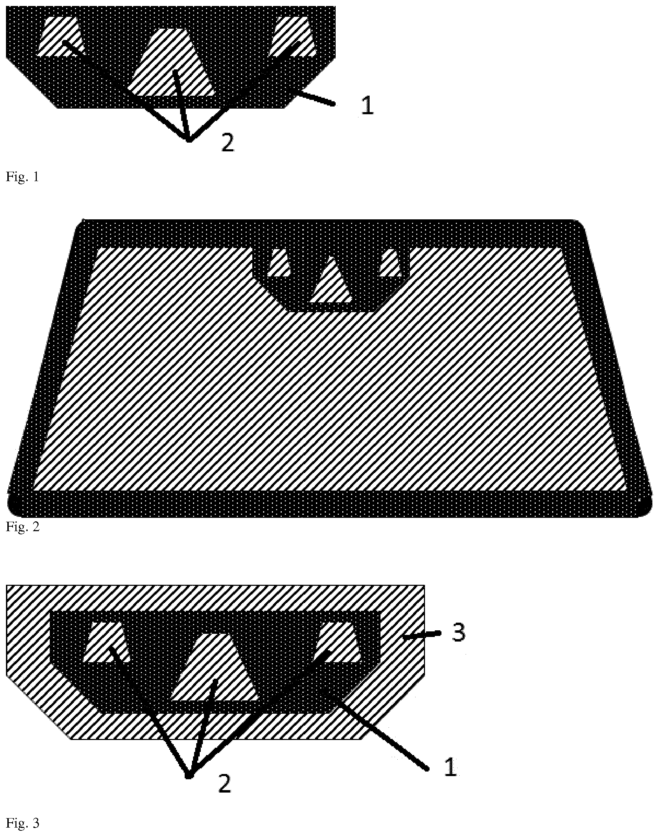

The shape and size of the obscuration area is not of particular importance and may be rectangular or follow the contours of the array field of sensors / cameras present behind the in the laminated glass and / or the entire perimeter of the finished laminated glass. Fig. 2 and 3 show shapes of the obscuration area by way of example.

In a first variant, film A may have the size of the obscuration area as shown in Fig. 1. In a second variant as in shown Fig. 2 or 6, film A may have the size of film B.

However, film A may have any size between these extreme variants, like slightly larger than the obscuration area as shown in Fig. 3, 4 and 5. The part of film A which is outside the obscuration area should be as transparent for visible light as possible. At best, the parts of film A outside the obscuration area should be as transparent for visible light as the transparent areas in the obscuration area.

In order to avoid wrinkling and or deformation of film A due to excessive heating in a drying step of the printing or coating process, it is crucial, that film A will not be exposed to temperatures above its glass transition temperature as measurable as Tg by DSC method. It is thus preferred, that the temperature of film A during the drying step is kept below Tg of the film by at least 3 °C or at least 5 °C or at least 10 °C or at least 15 °C or most preferred or at least by 20 °C.

The dry-film thickness of the printed parts is between 1-50 µm depending on printing technique and required opacity. Usually the dry-film thickness is between 10-30 µm. High enough total dry-film thicknesses can be achieved by overlaying ink-layers through repetition of sequential printing / coating steps.

Preferably, the printed-on or coated-on pigmented layer on film A will be oriented facing film B rather than the glass surface to avoid differences of adhesion between the transparent center and the printed-on edge portion of film A on the glass surface due to components of the pigmented layer.

If a combination of traditional black frit and localized obscuration through film A is desired, any combination and configuration can be applied. E.g. when black frit constitutes a black obscuration band on side 2 of the windshield, the black-printed / -coated film A may be contacting either side 2 or 3 in the windshield. When black frit constitutes a black obscuration band on side 4 of the windshield, the black-printed / -coated film A may be contacting either side 3 or 2 in the windshield. Typically it will be advantageous to position film A in proximity to the black frit layer e.g. in a surface1 - surface2 / film B / film A / surface3 - surface4 with black frit configuration. On the other hand side, 3D effects can be obtained if film A is positioned in non-proximity to a black frit bearing glass surface. For example in a surface1 - surface2 / film A / film B / surface3 - surface4 with black frit configuration or a surface1 - surface2 with black frit / film B / film A / surface3 - surface4 configuration.

Film A in the starting state prior to lamination may have a thickness ratio to film B of less than 0.2.

The thickness of a film A in the starting state prior to lamination is 10 - 250 µm, preferably 20 - 160 µm, preferably 30 - 120 µm, preferably 40 - 100 µm and most preferably 50 - 80 µm. This range of thickness does not include additional printing layer / coating layer on the films. In the laminated glass, the thickness of the film can increase by transfer of plasticiser from film B.

Film A is produced separately from film B (for example extruded or solvent cast) and has either no plasticiser at all or sufficiently small proportion of plasticiser so that subsequent functionalization and processing is not adversely influenced.

Since film A will preferably in direct contact with one of the inner surface of the laminated glass, it is desirable to control its adhesion to an intermediate level in order to reach satisfactory penetration resistance mandatory for the different glazing positions of a motor vehicle as stipulated in the different safety glass standards like ECE 43R. To this end, film A may contain alkali metal ion and/or earth alkali metal ion to adjust their adhesion level to glass (so called Anti-Adhesion Additives).

As alkali metal ion, potassium or sodium or lithium are preferred. Preferred ranges of concentration of the alkali metal ions are 7 - 210, preferably 14 - 140 and more preferably 21 - 140 ppm in the case of lithium, 23 - 690, preferably 46 - 460 and more preferably 69 - 460 ppm in the case of sodium and 39 - 1170, preferably 78 - 780 ppm and more preferably 117 - 780 in the case of potassium. It is furthermore preferred to add the alkali metal ions in form of salts of carboxylic acids having 1 to 10 carbon atoms. Especially preferred is potassium acetate as adhesion control agent.

The total amount of alkali metal salts may be as low as 0.005 % by weight based on the weight of film A. Preferred ranges of alkali metal salt are 0.01 % - 0.1 %; 0.02 - 0.08 %; 0.03 - 0.06 %, each weight % based on the weight of film A.

Film A used in the laminates of the invention may additionally comprise alkaline earth ions, but since their effect on adhesion is limited, only small amounts as compared to the alkali ion should be used. In a first embodiment of the invention film A comprises 0 to 20 ppm alkaline earth ions, preferable 0 to 5 ppm.

However, it is known that alkaline earth ions have a balancing effect of adhesion when a plasticized PVB film faces two glass sheets with different surface chemistry. Accordingly, in a second embodiment of the invention, film A comprises 5 - 20 ppm alkaline earth ions. The alkaline earth ions can be added in form salts of carboxylic acids having 1 to 10 carbon atoms. Especially preferred is magnesium acetate as secondary adhesion control agent. In this embodiment, the ratio of alkali ions to alkaline earth ions in ppm in film A is preferable at least than 1, especially higher than 5 and more preferred higher than 10.

In alternative to the amount of alkali and earth alkali ions, the alkaline titer of film A and B may be used to characterize the amount of anti-adhesion agents (i.e. alkali and earth alkali salts) in the films. The alkaline titer of film A may be higher than 10, higher than 20, higher than 40, higher than 50, higher than 80, higher than 90 and preferred higher than 100, in each case with a maximum value of 500. In contrast to film A, the alkaline titer of film B is preferred to be lower, and more particularly the difference between alkaline titer (film A) - alkaline titer (film B) is more than 2, 6 and preferably more than 10 AT units.

In order to avoid haze, the amount of chloride ions and/or nitrate ions and/or sulphate ions in film A may be reduced.

The chloride content of the film A can thus be less than 150 ppm, preferably less than 100 ppm, and in particular less than 50 ppm. In the ideal case, the chloride content of the film A is less than 10 ppm or even 0 ppm.

The nitrate content of film A optionally may be less than 150 ppm, preferably less than 100 ppm, and in particular less than 50 ppm. In the ideal case, the nitrate content of film A is less than 10 ppm or even 0 ppm.

Again optionally, the sulphate content of film A may be less than 150 ppm, preferably less than 100 ppm, and in particular less than 50 ppm. In the ideal case, the sulphate content of the film A is less than 10 ppm or even 0 ppm.

### Film B

Film B may be any plasticized PVB-film known in the art. The films A and B may contain, in the starting state prior to lamination and/or in a stack prepared for lamination between glass sheets, a single plasticiser as well as mixtures of plasticisers both of different and identical composition. The term "different composition" refers to both the type of plasticiser and proportion thereof in the mixture. Film A and film B after lamination, i.e. in the finished laminated glass, preferably have the same plasticisers WA and WB. In a preferred variant, film A in its starting state, however, does not contain any plasticiser and after lamination contains plasticiser WB in equilibrium amount.

Plasticiser-containing films B used in accordance with the invention contain, in the starting state prior to lamination, at least 22 % by weight, such as 22.0 - 45.0 % by weight, preferably 25.0 - 32.0 % by weight and in particular 26.0 - 30.0 % by weight plasticiser.

Films A used in accordance with the invention may contain, in the starting state prior to lamination, less than 22 % by weight (such as 21.9 % by weight), less than 18 % by weight less than 16 % by weight, less than 12 % by weight, less than 8 % by weight, less than 4 % by weight, less than 2 % by weight, less than 1 % by weight or even no plasticiser (0.0 % by weight). In a preferred embodiment of the invention, films A with a low plasticiser content preferably contain 0.0 - 8 % by weight of plasticiser, most preferred 0 - 4 wght %.

The films A or B preferably contain polyvinyl acetals having a proportion of polyvinyl acetate groups, either identically or differently, of 0.1 to 20 mol %, preferably 0.5 to 3 mol %, or 5 to 8 mol %.

The thickness of film B in the starting state is 450 - 2500 µm, preferably 600 - 1000 µm, preferably 700 - 900 µm. A plurality of films B may be used in the invention, either being stacked on each other or separated by films A.

If films B are stretched prior to production of the sandwich and/or additionally are adapted to the shape of a screen (for example a windscreen) in a curved manner, the specified thicknesses at the moment of lamination may reduce once more by up to 20 %.

### Polyvinyl Acetal

The films A and B used in accordance with the invention contain polyvinyl acetals, which are produced by acetalisation of polyvinyl alcohol or ethylene vinyl alcohol copolymer.

The films can contain polyvinyl acetals, each having a different polyvinyl alcohol content, degree of acetalisation, residual acetate content, ethylene proportion, molecular weight and/or different chain lengths of the aldehyde of the acetal groups.

In particular, the aldehydes or keto compounds used for the production of the polyvinyl acetals can be linear or branched (that is to say of the "n" or "iso" type) containing 2 to 10 carbon atoms, which leads to corresponding linear or branched acetal groups. The polyvinyl acetals are referred to accordingly as "polyvinyl (iso)acetals" or "polyvinyl (n)acetals".

The polyvinylacetal used in accordance with the invention results in particular from the reaction of at least one polyvinyl alcohol with one or more aliphatic unbranched keto-compounds containing 2 to 10 carbon atoms. To this end, n-butyraldehyde is preferably used.

The polyvinyl alcohols or ethylene vinyl alcohol copolymers used to produce the polyvinyl acetals in the films A or B may be identical or different, pure or a mixture of polyvinyl alcohols or ethylene vinyl alcohol copolymers with different degree of polymerisation or degree of hydrolysis.

The polyvinyl acetate content of the polyvinyl acetals in the films A or B can be set by use of a polyvinyl alcohol or ethylene vinyl alcohol copolymer saponified to an appropriate degree. The polarity of the polyvinyl acetal is influenced by the polyvinyl acetate content, whereby the plasticiser compatibility and the mechanical strength of the respective layer also change. It is also possible to carry out the acetalisation of the polyvinyl alcohols or ethylene vinyl alcohol copolymers with a mixture of a number of aldehydes or keto compounds.

The films A or B preferably contain polyvinyl acetals having a proportion of polyvinyl acetate groups, either identically or differently, of 0.1 to 20 mol %, preferably 0.5 to 3 mol %, or 5 to 8 mol %.

The polyvinyl alcohol content of the polyvinyl acetal PA used in film A may be between 6 - 26 % by weight, 8 - 24 % by weight, 10 - 22 % by weight, 12 - 21 % by weight, 14 - 20 % by weight, 16 - 19 % by weight and preferably between 16 and 21 % by weight or 10 - 16 % by weight.

Independent of film A, the polyvinyl alcohol content of the polyvinyl acetals PB used in film B may be between 14 - 26 % by weight, 16 - 24 % by weight, 17 - 23 % by weight and preferably between 18 and 21 % by weight.

In a preferred embodiment of the invention, film A comprises a polyvinyl acetal PA with a proportion of vinyl alcohol groups from 6 to 26 % by weight and the film B comprises a polyvinyl acetal B with a proportion of vinyl alcohol groups from 14 to 26 % by weight.

The films A or B preferably contain uncross-linked polyvinyl acetal. The use of cross-linked polyvinyl acetals is also possible. Methods for cross-linking polyvinyl acetals are described, for example, in EP 1527107 B1 and WO 2004/063231 A1 (thermal self-cross-linking of polyvinyl acetals containing carboxyl groups), EP 1606325 A1 (polyvinyl acetals cross-linked with polyaldehydes) and WO 03/020776 A1 (polyvinyl acetal cross-linked with glyoxylic acid).

### Plasticizer

Films A and/or B used in accordance with the invention may contain, as plasticiser, one or more compounds selected from the following groups:
- esters of polyvalent aliphatic or aromatic acids, for example dialkyl adipates, such as dihexyl adipate, dioctyl adipate, hexyl cyclohexyl adipate, mixtures of heptyl adipates and nonyl adipates, diisononyl adipate, heptyl nonyl adipate, and esters of adipic acid with cycloaliphatic ester alcohols or ester alcohols containing ether compounds, dialkyl sebacates, such as dibutyl sebacate, and also esters of sebacic acid with cycloaliphatic ester alcohols or ester alcohols containing ether compounds, esters of phthalic acid, such as butyl benzyl phthalate or bis-2-butoxyethyl phthalate.
- esters or ethers of polyvalent aliphatic or aromatic alcohols or oligo ether glycols with one or more unbranched or branched aliphatic or aromatic substituents, for example esters of glycerol, diglycols, triglycols or tetraglycols with linear or branched aliphatic or cycloaliphatic carboxylic acids; Examples of the latter group include diethylene glycol-bis-(2-ethyl hexanoate), triethylene glycol-bis-(2-ethyl hexanoate), triethylene glycol-bis-(2-ethyl butanoate), tetraethylene glycol-bis-n-heptanoate, triethylene glycol-bis-n-heptanoate, triethylene glycol-bis-n-hexanoate, tetraethylene glycol dimethyl ether and/or dipropylene glycol benzoate
- phosphates with aliphatic or aromatic ester alcohols, such as tris(2-ethylhexyl)phosphate (TOF), triethyl phosphate, diphenyl-2-ethylhexyl phosphate, and/or tricresyl phosphate
- esters of citric acid, succinic acid and/or fumaric acid.

By definition, plasticisers are organic liquids having a high boiling point. For this reason, further types of organic liquids having a boiling point above 120 °C can also be used as plasticiser.

Films A in the variants in which a plasticiser WA is present in film A in the starting state, and also films B particularly preferably contain 1,2-cyclohexane dicarboxylic acid diisononyl ester (DINCH) or triethylene glycol-bis-2-ethyl hexanoate (3GO or 3G8) as plasticiser.

Film B may consist of at least two sub-films B' and B'', which have a different plasticiser content.

In addition, films A and B may contain further additives, such as residual quantities of water, UV absorber, antioxidants, adhesion regulators, optical brighteners or fluorescent additives, stabilisers, colorants, processing aids, inorganic or organic nanoparticles, pyrogenic silicic acid and/or surface active substances.

In particular, film B may comprise 0.001 to 0.1 % by weight of alkaline metal salts and/or alkaline earth salts of carboxylic acids as adhesion control agent. It is preferred that film B contains magnesium ions in an amount of at least 10 ppm, preferably 20 ppm and most preferably 30 ppm.

### Lamination Process

The present invention also relates to a method for producing the described glass laminates, in which the film A is positioned on a glass sheet, then covered by at least one film B, and a second glass sheet is then applied.

Alternatively, it is possible for film B to be positioned on a glass sheet, then to be covered by at least one film A, and for a second glass sheet to be applied.

The present invention relates furthermore to a method for producing a laminated glass wherein a stack comprising at least one film A and at least one film B is provided, the stack is positioned on a first glass sheet and a second glass sheet is then applied.

It is possible in accordance with the invention to first melt the film A onto a glass sheet over the entire area or locally by increased temperature and to then cover this with the film B. Alternatively, films A and B can be positioned jointly between two glass sheets and melted at increased temperature.

The lamination step for producing a laminated glass is preferably carried out such that films A and B are positioned between two glass sheets and the layered body thus prepared is pressed under increased or reduced pressure and increased temperature to form a laminate.

To laminate the layered body, the methods with which a person skilled in the art is familiar can be used with and without prior production of a pre-laminate.

So called "autoclave processes" are carried out at an increased pressure from approximately 10 to 15 bar and temperatures from 100 to 150 °C during approximately 2 hours. Vacuum bag or vacuum ring methods, for example according to EP 1 235 683 B1, function at approximately 200 mbar and 130 to 145 °C.

Vacuum laminators may also be used. These consist of a chamber that can be heated and evacuated, in which laminated glazings can be laminated within 30 - 60 minutes. Reduced pressures from 0.01 to 300 mbar and temperatures from 100 to 200 °C, in particular 130 - 160 °C, have proven their worth in practice.

In the simplest case, in order to produce the laminated glass laminates, film A or B is positioned on a glass sheet, and the further film B or A is positioned synchronously or subsequently. The second glass sheet is then applied and a glass film laminate is produced. Excessive air can then be removed with the aid of any pre-lamination method known to a person skilled in the art. Here, the layers are also already firstly lightly adhesively bonded to one another and to the glass.

The glass film laminate may then be subjected to an autoclave process. Film A is preferably positioned on the first glass sheet and covered by the thicker film B before the second glass sheet is applied. The method can be carried out in many conceivable and, in principle, practicable variants. For example, film A is easily removed from a roll of an appropriate width, whereas film B has been tailor-cut beforehand to the size of the laminated glass to be produced. This is advantageous in particular in the case of windscreens and other automotive glazing parts. In this case, it is particularly advantageous to additionally still stretch the thicker film B before it is tailor cut. This enables a more economical use of film, or, for the case in which film B has a colour tint, allows the adaptation of the curvature thereof to the upper sheet edge.

In the automotive field, in particular for the production of windscreens, films A and/or B may be provided with a coloured region like an ink ribbon in the upper region of the films. To this end, either the upper part of film B can be co-extruded with a suitably coloured polymer melt.

In accordance with the invention, films B may therefore have a colour tint, which in particular has already been adapted in a prior process step to the geometry of a windscreen by the above described shaping process.

It is also possible for the films B to have a wedge-shaped thickness profile. The laminated glass laminate according to the invention obtains a wedge-shaped thickness profile even with plane-parallel thickness profile of the film A and can be used in motor vehicle windscreens for HUD displays.

Furthermore, film B may comprise at least two layers wherein the amount of plasticizer WB in the layers differs by least 2 % by weight. For sound-damping purposes, film B comprises 3 layers of which the core layer is softer due to higher plasticizer content.

### Laminated glass

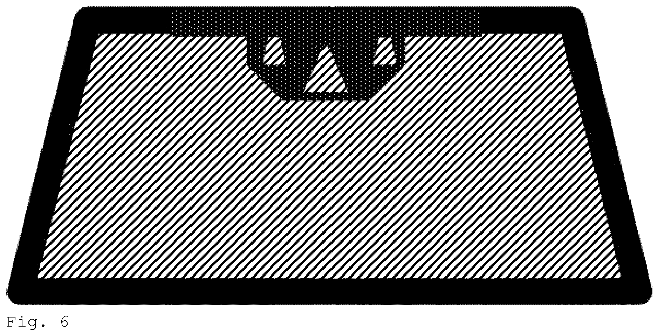

Besides the obscuration area, the laminated glass according to the invention may be provided at the edges of at least one glass sheet are provided with an obscuration band (6). Such band is for example shown in Fig. 2, 4, 5, or 6.

The obscuration band (6) may be provided at least in part by a black frit coating on at least one surface of at least one glass sheet, as long as the black frit does not create too strong optical flaws at the transparent areas of the obscuration area.

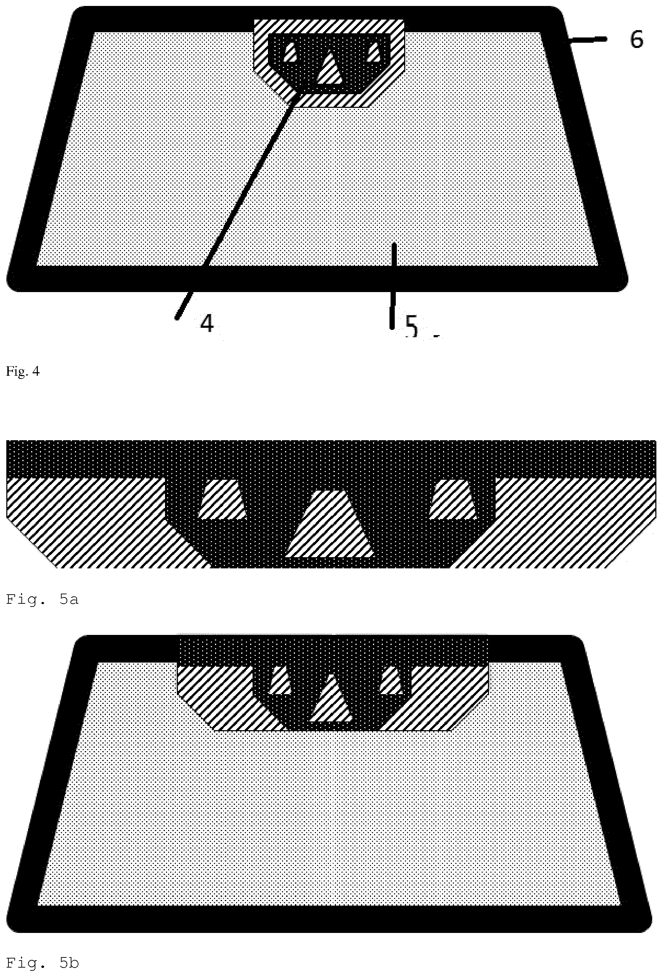

In another embodiment, the obscuration band is provided at least in part by film A as shown in Fig. 5a/b. To this end, film A needs to be provided with a printing/coating at the edges similar or identical to the obscuration area and have substantially the same size and shape as the glass sheets and/or film B.

Fig 2, 4, 5 and 6 show these embodiments with the obscuration band and obscuration area as separate or overlapping entities.

In the simplest case, film B is a commercially available PVB film with or without ink ribbon and with or without a wedge-like thickness profile. Films B with nanoparticles dispersed therein for IR protection can also be used as coloured films. Of course, a film B may also be a film having an acoustic function, such that soundproofing properties that are further improved are obtained by combination with a film A. Of course, a film B may already also combine a number of the mentioned functions.

The thin films A are generally produced by extrusion with use of a cast-film line or in the form of a blown film. Here, a surface roughness may also be produced by controlled melt fracture or with the cast-film method additionally by use of a structured chill roll and/or structure back roll. Alternatively, solvent-cast method can be used for producing film A prior to functionalization and use in the described penetration resistant glass laminates. Films used in accordance with the invention preferably have a one-sided surface structure with a roughness Rz from 0 to 25 µm, preferably Rz from 1 to 20 µm, particularly preferably Rz from 3 to 15 µm and in particular Rz from 4 to 12 µm. It is particularly preferable if the side of film A coming into contact with the glass sheet has a surface roughness Rz of no more than 20 % of its thickness.

### Use of the laminate

The laminated glass according to invention may be used for windscreens, back-lights and side glazing for cars, busses, trucks, ships or airplanes.

## Claims

1. Laminated glass comprising two sheets of glass, combined by an adhesive film comprising at least one film B containing a polyvinyl acetal PB and at least one plasticiser WB; and provided with an obscuration area (1) having at least one transparent area (2) embedded herein **characterised in that** the obscuration area is provided by a film A containing a polyvinyl acetal PA and optionally at least one plasticiser WA wherein film A is positioned in contact with film B and wherein prior to combining the two glass sheets, the amount of plasticiser WA in film A is less than 22 % by weight and the amount of plasticiser WB in film B is at least 22 % by weight and wherein the obscuration area having at least one transparent area is provided by a printed or coated layer on at least one surface of film A and wherein the transparent areas are not provided with a printed or coated layer and wherein film A does not have an opening.

2. Laminated glass according to claim 1, **characterised in that** the printed or coated layer is provided by pigments or dyes selected from the group consisting of carbon black, iron oxide, polyaniline, perylenes and spinel pigments.

3. Laminated glass according to claim 1 or 2, **characterised in that** film A has the size of the obscuration area.

4. Laminated glass according to any of the claims 1 or 2, **characterised in that** film A has the size of film B.

5. Laminated glass according to any of the claims 1 to 4, **characterised in that** the edges of at least one glass sheet are at least in part provided with an obscuration band.

6. Laminated glass according to claim 5, **characterised in that** the obscuration band is provided at least in part by a black frit coating on at least one surface of at least one glass sheet.

7. Laminated glass according to claim 5, **characterised in that** the obscuration band is provided at least in part by film A.

8. Laminated glass according to any of the claims 1 to 7, **characterised in that** the thickness ratio of film A to film B is less than 0.2.

9. Laminated glass according to any of the claims 1 to 8, **characterised in that** film B comprises at least two layers wherein the amount of plasticizer WB in the layers differs by least 2 % by weight.

10. Laminated glass according to any of the claim 1 to 9, **characterised in that** the film B has a wedge-shaped thickness profile.

11. Laminated glass according to any of the claims 1 to 10, **characterised in that** the transparent areas of the obscuration area are provided with optical detection devices positioned at or on one surface of a glass sheet.

12. Laminated glass according to claim 11, **characterised in that** optical detection devices are digital cameras, range finders, haze meters, rain sensors, target detectors, scanning laser devices (LIDAR).

13. Use of the laminated glass according to any of the claims 1 to 12 for windscreens, back-lights and side glazing for cars, busses, trucks, ships or airplanes.

## Patentansprüche

1. Laminierte Glas, das zwei Scheiben Glas umfasst, die durch eine Klebefolie kombiniert sind, die mindestens eine Folie B umfasst, die ein Polyvinylacetal PB und mindestens einen Weichmacher WB enthält; und mit einem Sichttrübungsbereich (1) versehen ist, der mindestens einen durchsichtigen Bereich (2) aufweist, der darin eingebettet ist, **dadurch gekennzeichnet, dass** der Sichttrübungsbereich durch eine Folie A bereitgestellt ist, die ein Polyvinylacetal PA und wahlweise mindestens einen Weichmacher WA enthält, wobei die Folie A in Kontakt mit der Folie B positioniert ist und wobei vor Kombinieren der beiden Glasscheiben die Menge Weichmacher WA in der Folie A weniger als 22 Gew.-% beträgt und die Menge Weichmacher WB in der Folie B mindestens 22 Gew.-% beträgt und wobei der Sichttrübungsbereich, der mindestens einen durchsichtigen Bereich aufweist, durch eine gedruckte oder schichtförmig aufgebrachte Schicht auf mindestens einer Oberfläche der Folie A bereitgestellt wird und wobei die durchsichtigen Bereiche nicht mit einer gedruckten oder schichtförmig aufgebrachten Schicht versehen sind und wobei die Folie A keine Öffnung aufweist.

2. Laminiertes Glas nach Anspruch 1, **dadurch gekennzeichnet, dass** die gedruckte oder schichtförmig aufgebrachte Schicht durch Pigmente oder Farbstoffe bereitgestellt wird, die aus der Gruppe ausgewählt sind bestehend aus Ruß, Eisenoxid, Polyanilin, Perylenen und Spinellpigmenten.

3. Laminiertes Glas nach Anspruch 1 oder 2, **dadurch gekennzeichnet, dass** die Folie A die Größe des Sichttrübungsbereichs aufweist.

4. Laminiertes Glas nach einem der Ansprüche 1 oder 2 **dadurch gekennzeichnet, dass** die Folie A die Größe der Folie B aufweist.

5. Laminiertes Glas nach einem der Ansprüche 1 bis 4, **dadurch gekennzeichnet, dass** die Kanten von mindestens einer Glasscheibe mindestens teilweise mit einem Sichttrübungsband versehen sind.

6. Laminiertes Glas nach Anspruch 5, **dadurch gekennzeichnet, dass** das Sichttrübungsband mindestens teilweise durch eine schwarze Frittebeschichtung auf mindestens einer Oberfläche mindestens einer Glasscheibe bereitgestellt wird.

7. Laminiertes Glas nach Anspruch 5, **dadurch gekennzeichnet, dass** das Sichttrübungsband mindestens teilweise durch die Folie A bereitgestellt wird.

8. Laminiertes Glas nach einem der Ansprüche 1 bis 7, **dadurch gekennzeichnet, dass** das Dickenverhältnis der Folie A zur Folie B weniger als 0,2 beträgt.

9. Laminiertes Glas nach einem der Ansprüche 1 bis 8, **dadurch gekennzeichnet, dass** die Folie B mindestens zwei Schichten umfasst, wobei die Menge Weichmacher WB in den Schichten um mindestens 2 Gew.-% verschieden ist.

10. Laminiertes Glas nach einem der Ansprüche 1 bis 9, **dadurch gekennzeichnet, dass** die Folie B ein keilförmiges Dickenprofil aufweist.

11. Laminiertes Glas nach einem der Ansprüche 1 bis 10, **dadurch gekennzeichnet, dass** die durchsichtigen Bereiche des Sichttrübungsbereichs mit optischen Erfassungsvorrichtungen versehen sind, die an oder auf einer Oberfläche einer Glasscheibe positioniert sind.

12. Laminiertes Glas nach Anspruch 11, **dadurch gekennzeichnet, dass** optische Erfassungsvorrichtungen Digitalkameras, Entfernungsmesser, Trübungsmesser, Regensensoren, Zieldetektoren, Laserabtastvorrichtungen (LIDAR) sind.

13. Verwendung des laminierten Glases nach einem der Ansprüche 1 bis 12 für Windschutzscheiben, Rücklichter und Seitenverglasung für Autos, Busse, Lastwagen, Schiffe oder Flugzeuge.

## Revendications

1. Verre laminé comprenant deux feuilles de verre, combinées par un film adhésif comprenant au moins un film B contenant un polyvinyl acétal PB et au moins un plastifiant WB ; et fourni avec une zone d'obscuration (1) ayant au moins une zone transparente (2) incluse ici **caractérisé en ce que** la zone d'obscuration est fournie par un film A contenant un polyvinyl acétal PA et éventuellement au moins un plastifiant WA, le film A étant positionné en contact avec le film B et avant de combiner les deux feuilles de verre, la quantité du plastifiant WA dans le film A étant de moins de 22 % en poids et la quantité de plastifiant WB dans le film B étant d'au moins 22 % en poids et la zone d'obscuration ayant au moins une zone transparente étant fournie par une couche imprimée ou revêtue sur au moins une surface du film A et les zones transparentes n'étant pas fournies avec une couche imprimée ou revêtue et le film A n'ayant pas d'ouverture.

2. Verre laminé selon la revendication 1, **caractérisé en ce que** la couche imprimée ou revêtue est fournie par des pigments ou de colorants choisis dans le groupe constitué par le noir de charbon, l'oxyde de fer, la polyaniline, les pérylènes et les pigments spinaux.

3. Film laminé selon la revendication 1 ou 2, **caractérisé en ce que** le film A a la taille de la zone d'obscuration.

4. Verre laminé selon l'une quelconque des revendications 1 ou 2, **caractérisé en ce que** le film A a la taille du film B.

5. Verre laminé selon l'une quelconque des revendications 1 à 4, **caractérisé en ce que** les bords d'au moins une feuille de verre sont au moins en partie fournis avec une bande d'obscuration.

6. Verre laminé selon la revendication 5, **caractérisé en ce que** la bande d'obscuration est fournie au moins en partie par un revêtement de fritté noir sur au moins une surface d'au moins une feuille de verre.

7. Verre laminé selon la revendication 5, **caractérisé en ce que** la bande d'obscuration est fournie au moins en partie par le film A.

8. Verre la miné selon l'une quelconque des revendications 1 à 7, **caractérisé en ce que** le rapport d'épaisseur du film A au film B est de moins de 0,2.

9. Verre laminé selon l'une quelconque des revendications 1 à 8, **caractérisé en ce que** le film B comprend au moins deux couches la quantité de plastifiant WB dans les couches différant par moins de 2 % en poids.

10. Verre laminé selon l'une quelconque des revendications 1 à 9, **caractérisé en ce que** le film B a un profil d'épaisseur en forme de cale.

11. Verre laminé selon l'une quelconque des revendications 1 à 10, **caractérisé en ce que** les zones transparentes de la zone d'obscuration sont fournies avec des dispositifs de détection optique à ou sur une surface d'une feuille de verre.

12. Verre laminé selon la revendication 11, **caractérisé en ce que** les dispositifs de détection optique sont des caméras numériques, des télémètres, des visibilimètres, des capteurs de pluie, des détecteurs de cible, des dispositifs de scannage laser (LIDAR).

13. Utilisation du verre laminé selon l'une quelconque des revendications 1 à 12 pour des pare-brises, des rétroéclairages et des vitrages latéraux pour les voitures, les bus, les camions, les bateaux ou les avions.
